# EUROPEAN PATENT APPLICATION

(11) **EP 1 786 051 A1**
(43) Date of publication of application: **16.05.2007**
(21) Application number: 05765721.5
(22) Date of filing: 14.07.2005
(51) Int. Cl.: H01M 2/10

(54) **RECYCLABLE BATTERY PACK**

(30) Priority: 14.07.2004 JP 2004206865
(71) Applicant: MATSUSHITA ELECTRIC INDUSTRIAL CO., LTD., Osaka 571-8501 (JP)
(72) Inventor: OSADA, Naotake Matsushita Electric Ind. Co., Ltd., 1-3-7 Shiromi, Chuo-ku, Osaka 540-6319 (JP); SEKIGUCHI Akihiko Matsushita Electric Ind. Co., Lt, 1-3-7 Shiromi, Chuo-ku, Osaka 540-6319 (JP)
(74) Representative: Grünecker, Kinkeldey, Stockmair & Schwanhäusser Anwaltssozietät
(86) International application number: PCT/JP2005/013044
(87) International publication number: WO 2006/006669

(57) **Abstract**

A battery pack is provided, which can exchange a cell easily and safely when the life of the cell has expired, and can reuse the unnecessary cell.

The battery pack includes a battery part including a battery body, and a safety control part which prevents overcharge and overcurrent of the battery body, wherein the battery part and the safety control part are constituted as units which are different mechanically from each other, and the both units can be connected and separated mechanically and electrically.

## Description

### <Technical Field>

The present invention relates to a battery pack used in an attaching state to an electronic equipment.

### <Background Art>

Heretofore, as a battery pack used in an electronic equipment, there has been known a battery pack which includes an overcurrent detection circuit and an overcharge detection circuit to increase safety of the electronic equipment, and operates in an integrated state.

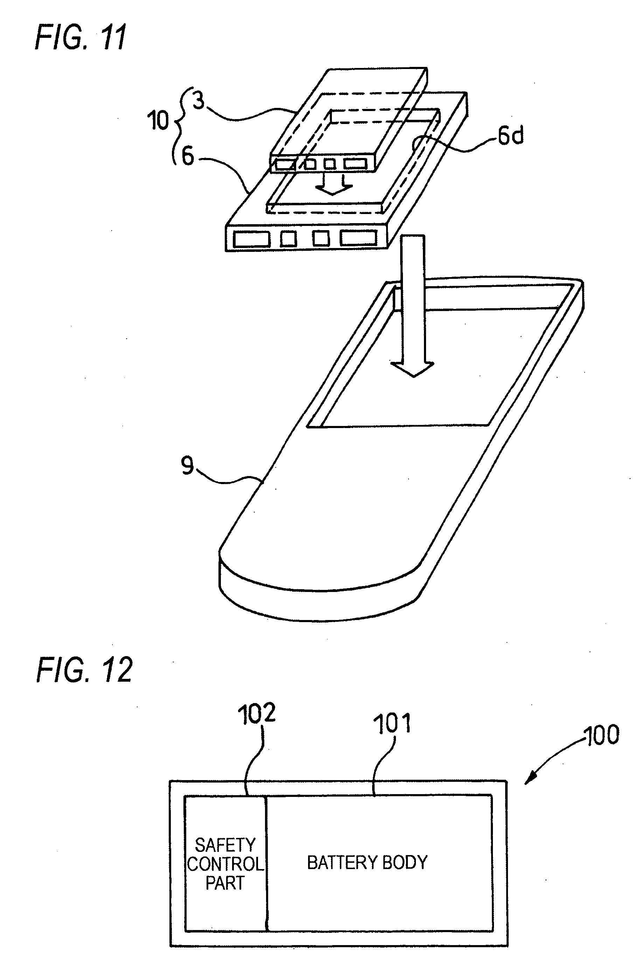

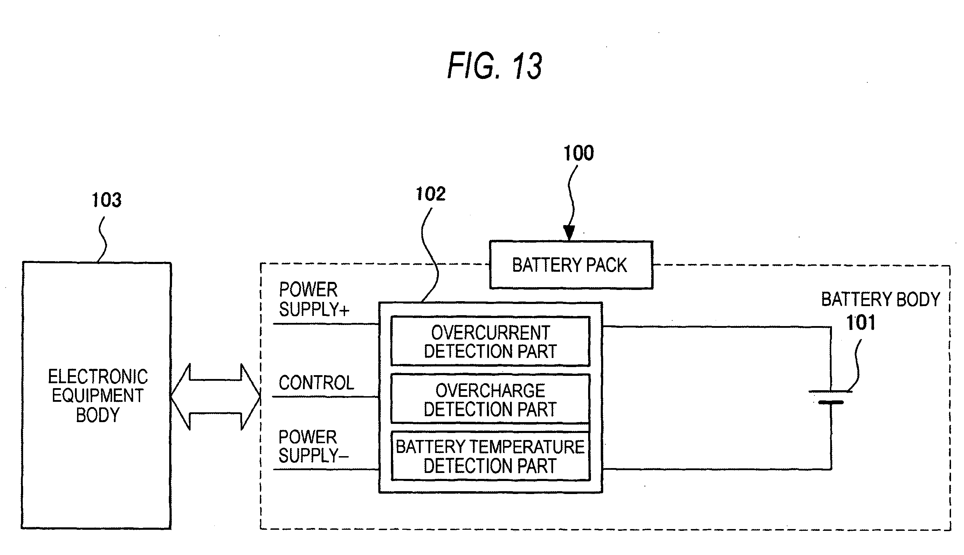

Figs. 12 and 13 are a schematic diagram and a schematic block diagram of such the conventional battery pack 100. In the battery pack 100, a battery body 101, and a safety control part 102 having an overcurrent detection part, an overcharge detection part and a battery temperature detection part are integrally sealed by mold resin. The safety control part 102 performs safety control for preventing overcurrent and overcharge.

According to this battery pack, it is possible to safely control high energy which the battery has, and to safely use an electronic equipment body 103.
Patent Document 1: JP-A-7-037563

### <Disclosure of the Invention>

However, since the battery body and the safety control part are integrated in the existing battery pack, when the life of the battery has expired, the battery pack itself must be exchanged. In result, the safety control part which can be still used enough is recovered together with the battery for the purpose of recycle. Therefore, there is a problem that the safety control part cannot be reused easily. Further, there is a problem that work of taking out only the battery body from the battery pack is low in efficiency because the number of other parts included in the battery pack than the battery body is large.

It is an object of the invention to provide a recyclable battery pack which puts a battery unit and a safety control part of a battery pack in separable state, and separates, in case that it is judged the life of the battery has expired, the battery unit from the safety control part, to exchange the battery unit to a new battery unit, whereby battery performance can be restored by the minimum number of maintenance and exchange parts without discarding the safety control part.

A battery pack of the invention includes a battery part including a battery body, and a safety control part which prevents overcharge and overcurrent of the battery body. The battery part and the safety control part are constituted as units which are different mechanically from each other, and the both units can be connected and separated mechanically and electrically.

By this constitution, in case that it is judged the life of the battery has expired, the battery part (battery unit) is taken out and exchanged to a new battery unit, and the new battery unit is attached, whereby the operation having the natural battery performance becomes possible, and the battery pack can be used semipermanently in a state where the safety control part (safety control unit) having the overcurrent preventing function and the overcharge preventing function is used as it is.

Further, the battery pack may be so constructed that: the battery part includes an output control part which performs output control of the battery body; the safety control part includes a connection detecting part which detects connection with the battery part; and the connection detecting part, when detecting the connection with the battery part, outputs, a control signal which permits power supply from the battery body to the outside, to the output control part.

Further, the battery pack may be so constructed that: the output control part includes an output limit part which includes a switching element and a current limit element which are connected to each other in parallel; the output control part is connected in series to a power supply path from the battery body to the outside; and the switching element is switched off in the separation time of the both units, and switched on by the control signal from the connection detecting part in the connection time of the both units.

In a state where the above-described battery part is not attached, a high impedance state is provided between a terminal portion of the battery body and an external terminal of the battery part. Therefore, the battery part can be safely kept and used.

The battery pack may be so constructed that: the connection detecting part includes an operational amplifier connected through the output control part to the power supply path in the connection time of the both units, and outputs the output of the operational amplifier as a control signal to the output control part. Further, the battery pack may be so constructed that: the unit constituting the safety control part has an opening to which the unit constituting the battery part is attached.

The recyclable battery pack of the invention has the mechanism which attaches or detaches the battery part and the safety control part having the overcharge preventing function and the overcurrent preventing function for the purpose of protection of the battery performance. Further, the battery part can be safely kept and can be attached to the electronic equipment.

In the invention, the battery part is composed of the minimum number of parts in which the battery body and the other parts can be readily separation-recovered. Therefore, the number of steps in recovery-disassembly processing can be reduced greatly.

In the invention, the safety control part of the battery can be used semipermanently.

### <Brief Description of the Drawings>

Fig. 1 is a conceptual diagram of a battery pack of the invention.
Fig. 2(a) is a perspective view of a battery part, and Fig. 2(b) is a perspective view showing a state where the battery part is connected to a safety control part thereby to form a battery pack.
Fig. 3 is a block diagram of the battery pack of the invention.
Fig. 4 is a flowchart for explaining a battery part separating operation.
Fig. 5 is a flowchart for explaining a battery part attaching operation.
Fig. 6 is a diagram which shows in detail the battery part of the battery pack of the invention.
Fig. 7 is a diagram showing another embodiment of the battery part.
Fig. 8 is a diagram further showing another embodiment of the battery part.
Fig. 9 is a diagram further showing another embodiment of the battery part.
Fig. 10 is a rear view of an electronic equipment in which the battery pack of the invention is built.
Fig. 11 is an exploded perspective view of the electronic equipment in which the battery pack of the invention is built.
Fig. 12 is a conceptual diagram of a conventional battery pack.
Fig. 13 is a block diagram of the conventional battery pack.

### <Best Mode for Carrying Out the Invention>

An embodiment of the invention will be described below with reference to drawings.

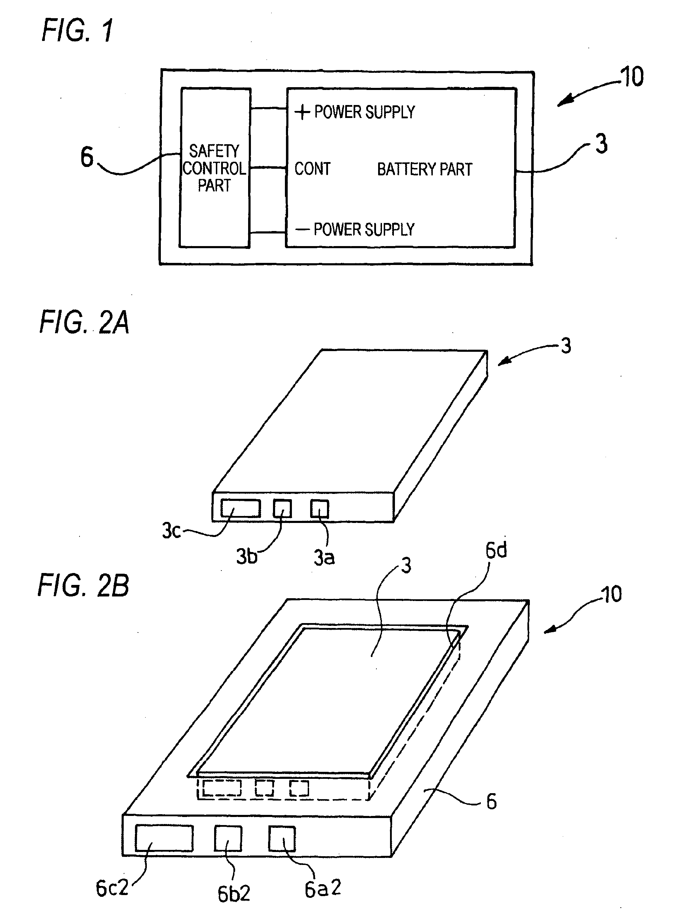

As shown in Figs. 1 and 2, a battery pack 10 of the invention includes a battery part (battery unit) 3 and a safety control part (safety control unit) 6 which are electrically connected to each other detachably. The battery part 3 is so constructed as to attach readily to the safety control part 6 detachably from an opening 6d of the safety control part 6. Further, the safety control part 6 is so constructed that: even in case that the life of the battery part 3 has expired, the safety control part 6 is separated from the battery part 3 and thereafter can be continuously used as it is.

"To be attached detachably" means that: the battery part 3 and the safety control part 6 are separable from each other without a tool or by means of a predetermined tool, and the safety control part 6 can be reused as it is, or after a little repair or adjustment. The battery part 3 is recovered for recycle. Accordingly, the battery part 3 and the safety control part 6 are constituted as units which are mechanically different from each other, and the both units can be connected and separated mechanically and electrically.

In the embodiment, fixing of the battery part 3 to the opening 6d can be performed by a usual built-in method. However, as long as the battery part 3 does not detach readily from the opening 6d in the using time, any method may be adopted. The built-in method is not limited particularly, but various built-in methods can be used.

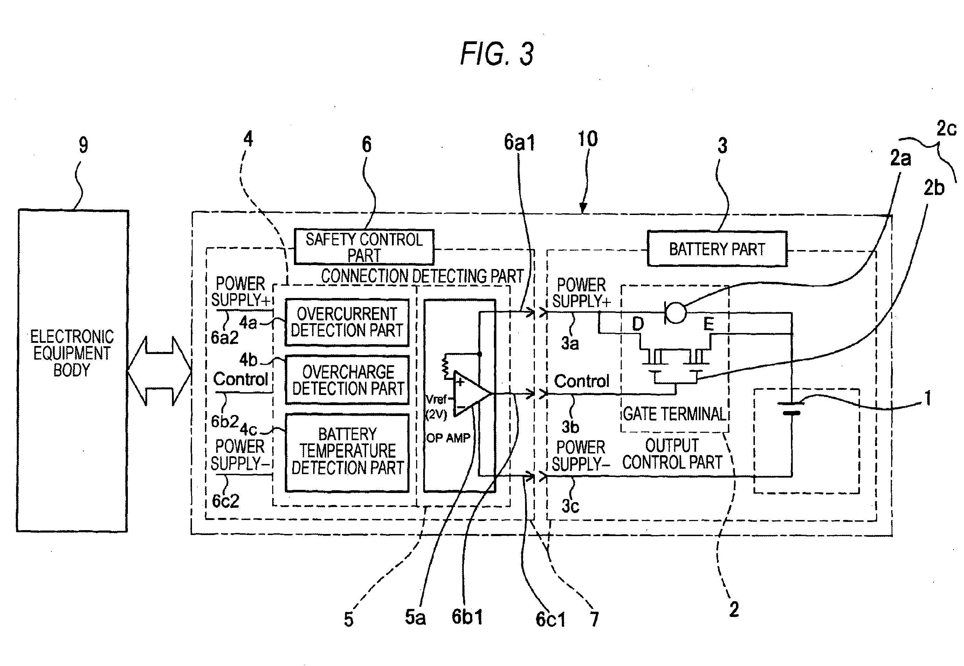

Further, as described later, the battery part 3 has, on its side surface, a plus terminal 3a, a control terminal 3b and a minus terminal 3c, which are connected respectively to an inner plus terminal 6a1, an inner control terminal 6b1 and an inner minus terminal 6c1 (Fig. 3) described later when the battery part 3 is built in the opening 6d of the safety control part 6. Further, an outer plus terminal 6a2, an outer control terminal 6b2 and an outer minus terminal 6c2, which are exposed to the outer surface of the battery pack 10 and conduct respectively to the inner plus terminal 6a1, the inner control terminal 6b1 and the inner minus terminal 6c1, are electrically connected and coupled directly to an electronic equipment body 9.

The battery part 3 includes a battery body 1 which generates directly the voltage and the electric current by itself, and an output control part 2 connected to the battery body 1.

The battery body 1 is a cell itself, which has a positive terminal and a negative terminal. Though the battery body 1 is composed of an arbitrary kind of power generating element which generates directly the voltage and the electric current, its kind and the minimum number of units is not limited. In this example, a lithium ion cell of 3.6V is used (the voltage range in the usual state is 3 to 4V).

The output control part 2 is a portion which controls the output of the battery body 1. Namely, the output control part 2 is a general term for a circuit including a portion corresponding to a current control circuit for outputting battery energy from the battery body 1 to the plus terminal, and a portion corresponding to a current limit circuit for applying power bias to a connection detecting part 5 which will be described later. As the output control part 2, various types can be used. In the embodiment, the output control part 2 includes at least a current limit element (constant current element) 2a and a bidirectional FET (Field Effect Transistor) switch 2b constituting a switching element. The current limit element 2a and the bidirectional FET switch 2b are connected to each other in parallel, constitute an output limit part 2c, and are connected in series to a power supply path (corresponding to the plus terminal 3a)of the battery part 3 from the battery body 1.

When the battery part 3 is attached to the safety control part 6, the control terminal 3b of the battery part 3 receives a signal from the connection detecting part 5 of the safety control part 6, which will be described later, and the voltage is applied from the battery body 1 to the plus terminal 3a.

The safety control part 6 includes an operation detecting part 4, a connection detecting part 5 connected to the operation detecting part 4, an outer plus terminal 6a2, an outer control terminal 6b2, and a minus control terminal 6c2. Further, the safety control part 6 has a function of preventing overcharge to the battery body 1 and overcurrent from the battery body 1 to the external electronic equipment body 9. In the embodiment, though the safety control part 6 seals the operation detecting part 4 and the connection detecting part 5 integrally with resin, and has the opening 6d constituting an acceptance portion of the battery part 3, the shape of the safety control part 6 is not limited to the shape in the embodiment. For example, the battery part 3 and the safety control part 6 may be connected by a mere connector without forming the opening 6 in the safety control part 6.

The operation detecting part 4 includes an overcurrent detection part 4a, an overcharge detection part 4b, and a battery temperature detection part 4c. The overcurrent detection part 4a detects overcurrent to the electron equipment body 9, and stops the output from the battery part 3 in case that it has detected the overcurrent. The overcharge detection part 4b detects overcharge for the battery part 3 in the charging time, and stops charging in case that it has detected the overcharge. Further, the battery temperature detection part 4c detects the temperature of the battery part 3 as a necessary parameter in the charging time. The respective parts 4a, 4b, and 4c can be constituted by the existing various circuits, and the kinds of circuits are not limited.

The connection detecting part 5 detects whether or not the battery part 3 is appropriately coupled and connected to the safety control part 6, and controls the output of the battery part 3. Namely, in the coupling state of the battery part 3 to the safety control part 6, the connection detecting part 5 outputs, to the output control part 2, a control signal which permits the voltage application and the power supply from the battery body 1 to the safety control part 6 as the external unit. The connection detecting part 5 can also use various circuits or elements. In the embodiment, an operational amplifier (OP AMP) 5a is used.

A connection part 7 is electrically composed of the plus terminal 3a, the control terminal 3b, and the minus terminal 3c which are located on the battery part side; and the inner plus terminal 6a1, the inner control terminal 6b1, the inner minus terminal 6c1 which are located on the safety control part side. The connection part 7 is mechanically composed of the side surface of the battery part 3, and the opening 6 of the safety control part 6.

Next, the operation of the battery pack in the embodiment will be described in detail with reference to Figs. 3 to 5.

Fig. 3 is a schematic block diagram of the battery pack in the embodiment.

As shown in Fig. 3, for the battery part 3, the output control part 2 including the current limit element (constant current element) 2a is provided in addition to the battery body 1, and the battery part 3 has the detachable structure from the safety control part 6. The connection detecting part 5 is provided for the safety control part 6 thereby to control input and output of the battery part 3. As the current limit element 2a, what has the current limiting function such as a usual resistance element can be arbitrarily used, and its kind is not particularly limited. Further, a constant current element such as a current regulative diode can be used, and a temperature stabilizing function can be provided for the current limit element at need.

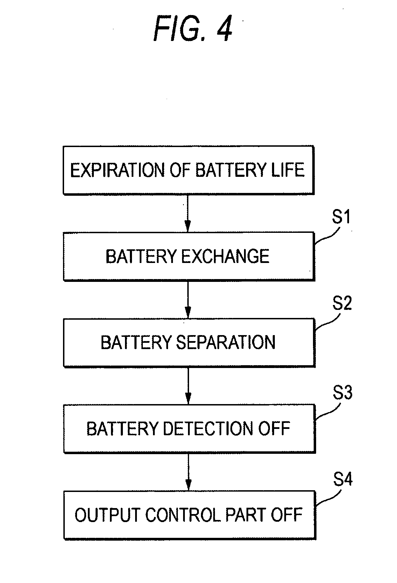

As shown in Fig. 4, in case that it is judged that the life of the battery has expired, exchange of the battery is executed (S1). At this time, when the battery part 3 is separated from the battery pack 10 (S2), the output of the connection detecting part 5 in the safety control part 6 becomes OFF (S3).

Since the control terminal 3b of the separated battery part 3 becomes L-level, the output control part 2 does not function (S4). Therefore, though the voltage of the battery can be detected in the plus terminal 3a of the battery part 3, it becomes impossible for the large electric current to flow therein, so that the battery part 3 can be safely kept.

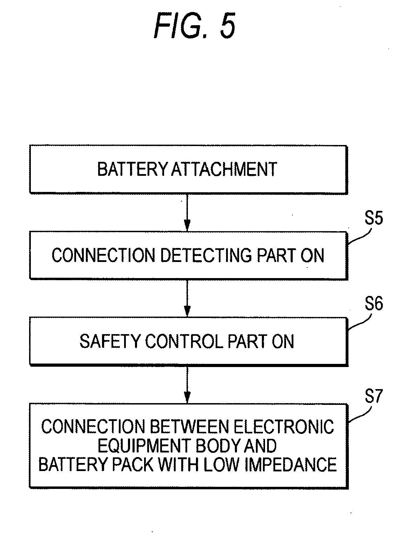

As shown in Fig. 5, when a new battery part 3 is attached to the safety control part 6 in this state, the voltage is supplied from the plus terminal 3a of the battery part 3, and the connection detecting part 5 becomes ON (S5). Hereby, the safety control part 6 attached to the battery body 1 becomes ON (S6), and the large electric current can be supplied through this circuit (S7).

In case that the voltage is not supplied from the plus terminal 3a of the battery part 3, or in case that the output control part 2 has broken down, energy is not supplied from the battery body 1. As known from the above, the battery part 3 can be safely maintained and kept in single.

Further, the operation of the battery pack will be described more detailedly with reference to Fig. 3.

In case that the battery part 3 has been attached to the battery pack 10, the plus terminal 3a, the control terminal 3b and the minus terminal 3c of the battery part 3 which are formed of metal are connected respectively to the inner plus terminal 6a1, the inner control terminal 6b1 and the inner minus terminal 6c1 of the safety control part with low electric resistance.

When the battery part 3 and the safety control part 6 have been coupled, the voltage is applied to the operational amplifier (OP AMP) 5a of the connection detecting part 5 from the battery body 1 of the battery part 3 through the resistance (current limit element 2a), the plus terminal 3a and the inner plus terminal 6a1. Since power impedance of the operational amplifier 5a is considerably larger than the resistant value of the current limit element 2a of the output control part 2, the value of the voltage from the battery body 1 is applied to a power supply of the operational amplifier as it is.

In case that a minus input terminal of the operational amplifier 5a is set at a reference voltage of about 2V, the 3 to 4V voltage which is nearly equal to the voltage of the battery body 1 is applied through a resistor to a plus terminal of the operational amplifier 5a. By comparison between the voltage of the plus terminal of the operational amplifier 5a and the voltage of the minus terminal thereof, the voltage of the plus terminal is higher, with the result that the voltage (signal) of 3V or higher is outputted from the output side of the operational amplifier 5a. This value is applied through the inner control terminal 6b1 and the control terminal 3b to a gate terminal of the FET switch 2b of the output control part 2 in the battery part 3. In result, power impedance between a D-portion and an E-portion (between a source and a drain of the FET switch 2b) becomes low (the FET switch becomes ON), and it is possible to supply the large electric current for exhibiting the natural performance of the battery body 1 from the plus terminal 3a to the electronic equipment body 9. Namely, the output from the operational amplifier 5a is used as a control signal which permits the power supply from the battery body 1 to the outside.

Further, since the output control part 2 has the bidirectional FET switch 2b, the charging operation of the battery part through the electronic equipment body 9 is also possible.

Thus, the battery pack in the embodiment has the similar performance to the performance in the usual use, and can exchange, in case that the exchange of the battery is required, only the battery part composed of the minimum number of parts.

Further, in case that the battery part is recycled and reproduced, since the number of parts is greatly reduced, compared with the conventional battery part, the battery body can be readily taken out, and recycling of the battery can be executed at lower cost.

In the embodiment, though the example in which the operation amplifier 5a is used as the connection detecting part 5 has been described, the inner plus terminal 6a1 and the inner control terminal 6b1 may be connected simply by a resistor. In this case, when the battery part 3 and the safety control part 6 are connected, and they are attached as the battery pack 10 to the electronic equipment body 9, since the voltage is applied to the gate (gate of FET switch 2b) of the output control part in the battery part 3, the battery output can be supplied to the electronic equipment with the low impedance. Hereby, the connection detecting part 5 can be realized by the simple constitution. On the other hand, by using the operational amplifier 5a, a delay circuit or a chattering elimination circuit can be at need provided in an input stage of the operational amplifier 5a, with the result that various functions can be given.

Further, the embodiment can correspond also to every power packs in which other high energy cells than the lithium ion cell can be used.

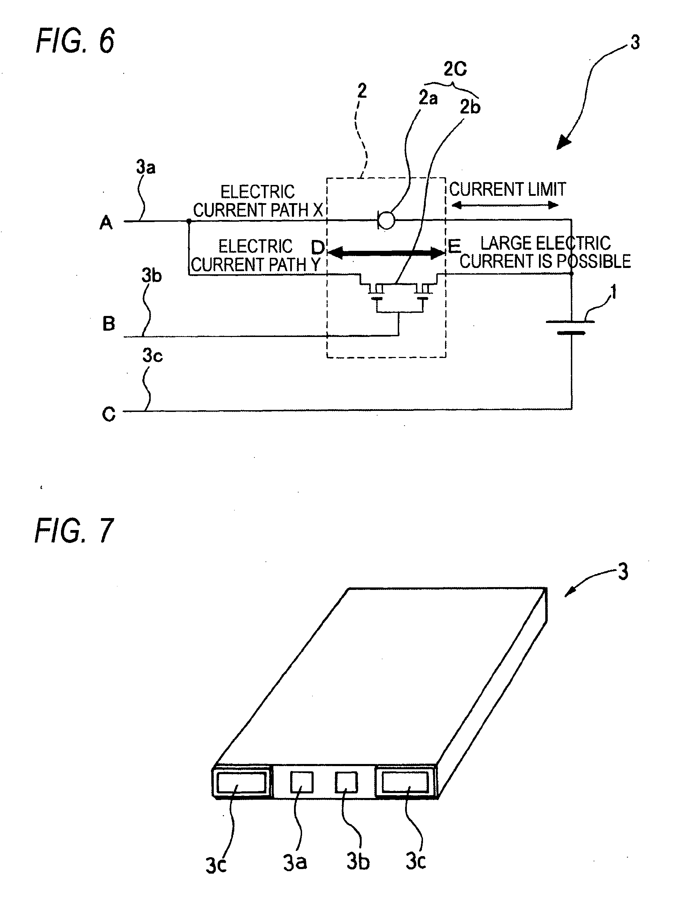

Fig. 6 is a block diagram of the battery part 3 of the invention.

As shown in Fig. 6, since, in the battery part 3 single body, the gate terminal which controls the output control part 2 is in the L-level state, the gate terminal of the bidirectional FET switch 2b is in a state where there is no plus electric charge. Therefore, in the single body, the resistant value between the D-E (between source-drain) of the FET switch 2b is high and the FET switch is in the insulating state (the FET switch is in the OFF state). The voltage from the battery body 1 is outputted to a terminal portion A. However, in this case, the voltage is applied through a current path X, and supplied through the current limit element 2a such as the resistor in the limited state to weak electric current. Therefore, the battery part 3 can be safely kept in single.

As described above, when the battery part 3 and the safety control part 6 are connected, and a terminal B becomes H-level by the signal from the operational amplifier 5a, the plus electric charge applied to the gate terminal of the bidirectional FET switch 2b makes the bidirectional FET switch 2b active, so that the large electric current can flow in a current path Y Since this state is limited to the case where the battery part 3 is attached to the battery pack, the battery part can be safely used.

Further, regarding the constitution of the battery part 3, various modifications are possible. In an example of Fig. 7, in order to give priority to the connection of the minus terminal, two convex portions 3d are provided on both ends of the battery part 3, and two minus terminals 3c are exposed onto the convex portions 3d. By this constitution, the minus terminal 3c is connected to the safety control part 6 more early than other terminals 3a and 3b, so that safety can be secured more.

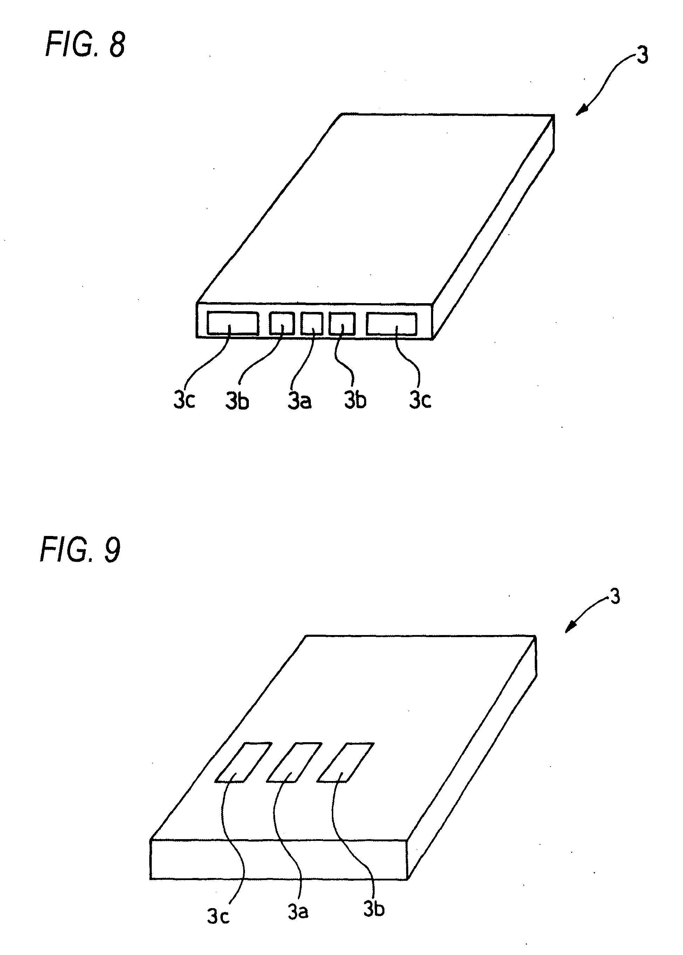

In an example of Fig. 8, two minus terminals 3c are provided on both ends of the battery part 3, and two control terminals 3b are provided between a plus terminal 3a and the minus terminals 3c. By this constitution, a bad effect of poor contact can be lowered more.

In an example of Fig. 9, a plus terminal 3a, a control terminal 3c and a minus terminal 3c are provided on the bottom surface of the battery part 3.

According to the above modified examples of the battery part, the shape of the battery part 3 accepting portion (opening 6d in Fig. 2(b)) of the safety control part 6 may be changed.

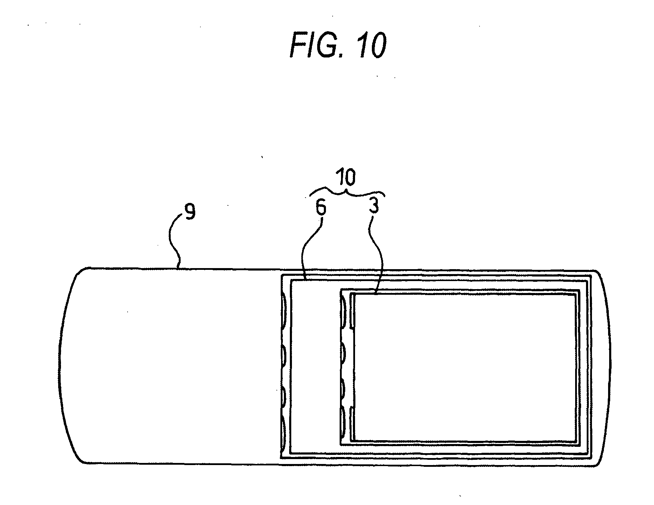

Fig. 10 shows a state where the battery pack 10 in which the battery part 3 and the safety control part 6 are coupled is built in the electronic equipment body 9. In this example, the electronic equipment is a portable information terminal such as a mobile telephone. Fig. 11 shows a state where the battery part 3 and the safety control part 6 are disassembled from the electronic equipment body 9. By matching the outer shape of the safety control part 6 with the shape of the conventional battery pack, it is not necessary to change the shape of an opening 9a of the electronic equipment body 9 which is a battery pack 10 accepting portion. Therefore, even in case that the battery pack 9 of the invention is used in place of the conventional battery pack, it is not necessary to newly change the design of the electronic equipment body 9 itself. Further, the kind of electronic equipment body 9 is not particularly limited, but the invention can be applied to equipments requiring various kinds of batteries.

Although the invention has been described with reference to various embodiments, it is to be understood that the invention is not limited to matters indicated in the embodiments, it is intent of the invention that those skilled in the art make changes and variation of the invention on the basis of claims and description of specification, and well-known art, and the changes and variation are included in a range requiring cover.

This application is based on Japanese Patent Application (No. 2004-206865) filed on July 14, 2004, the contents of which are herein incorporated by reference.

### Industrial Applicability

In the battery pack of the invention, only the battery part can be readily and safely attached and detached. Therefore, the battery pack of the invention is useful for effective utilization of the recycle portion of the battery used in the power supply part of the electronic equipment, that is, for reduction of the number of parts in the battery part which are objects for recycling, for reduction of the number of steps of taking out the battery body from the battery pack, and for improvement in using efficiency by size-reduction of the battery part.

## Claims

1. A battery pack comprising a battery part including a battery body, and a safety control part which prevents overcharge and overcurrent of the battery body, wherein
the battery part and the safety control part are constituted as units which are different mechanically from each other, and
the both units can be connected and separated mechanically and electrically.

2. The battery pack according to Claim 1, wherein
the battery part includes an output control part which performs output control of the battery body;
the safety control part includes a connection detecting part which detects connection with the battery part; and
the connection detecting part, when detecting the connection with the battery part, outputs, a control signal which permits power supply from the battery body to the outside, to the output control part.

3. The battery pack according to Claim 2, wherein
the output control part includes an output limit part which includes a switching element and a current limit element which are connected to each other in parallel;
the output control part is connected in series to a power supply path from the battery body to the outside; and
the switching element is switched off in the separation time of the both units, and switched on by the control signal from the connection detecting part in the connection time of the both units.

4. The battery pack according to Claim 3, wherein the connection detecting part includes an operational amplifier connected to the power supply path through the output control part in the connection time of the both units, and outputs the output of the operational amplifier as the control signal to the output control part.

5. The battery pack according to any one of Claims 1 to 4, wherein the unit constituting the safety control part has an opening to which the unit constituting the battery part is attached.
